**Europäisches Patentamt**

**European Patent Office**

**Office européen des brevets**

(11) Numéro de publication : **0 428 549 B1**

(12) **FASCICULE DE BREVET EUROPEEN**

(45) Date de publication du fascicule du brevet :
**19.11.92 Bulletin 92/47**

(21) Numéro de dépôt : **89908373.7**

(22) Date de dépôt : **28.07.89**

(86) Numéro de dépôt international :
**PCT/BE89/00037**

(87) Numéro de publication internationale :
**WO 90/01303 22.02.90 Gazette 90/05**

(51) Int. Cl.⁵ : **A61C 8/00**

(54) **IMPLANT.**

(30) Priorité : **02.08.88 BE 8800894**

(43) Date de publication de la demande :
**29.05.91 Bulletin 91/22**

(45) Mention de la délivrance du brevet :
**19.11.92 Bulletin 92/47**

(84) Etats contractants désignés :
**BE CH DE FR GB IT LI NL SE**

(56) Documents cités :
**EP-A- 0 139 253**
**EP-A- 0 216 031**
**CH-A- 597 843**

(56) Documents cités :
**DE-A- 2 540 077**
**FR-A- 2 589 350**
**US-A- 3 474 537**
**US-A- 3 579 831**

(73) Titulaire : **Dury, Georges Emile Ladislas**
**Avenue Franklin Rossevelt 141**
**B-1050 Bruxelles (BE)**

(72) Inventeur : **Dury, Georges Emile Ladislas**
**Avenue Franklin Rossevelt 141**
**B-1050 Bruxelles (BE)**

(74) Mandataire : **Vigneron, Jean et al**
**Cabinet VIGNERON 30 avenue Eugène**
**Godaux**
**B-1150 Bruxelles (BE)**

**Description**

La présente invention a pour objet un implant endo-osseux, utilisé en chirurgie maxillo-dentaire, en particulier chirurgie du maxillaire inférieur, et constitué d'au moins une pièce qui comprend un fût, destiné à être noyé dans l'os, dont une des extrémités est destinée à affleurer ou à faire saillie dans la cavité buccale et dont la dimension, prise parallèlement à son axe longitudinal, est telle que ledit fût s'étend à travers la corticale supérieure, le tissu spongieux et la corticale inférieure de l'os, afin de s'appuyer sur ces deux corticales.

Les divers types d'implant connus (Voir US-A-3474537 et DE-B-2540077) se répartissent notamment en deux catégories principales, une première catégorie d'implants, qui est certainement la plus répandue et qui comprend les implants cylindriques vissés ou non vissés, les implants lame, etc..., qui sont introduits, dans le cas du maxillaire inférieur, à travers la corticale supérieure de l'os et s'étendent dans cette dernière et dans le tissu spongieux de l'os et, une seconde catégorie d'implants, introduits, toujours dans le cas du maxillaire inférieur, à travers la corticale inférieure de l'os et s'étendant dans cette dernière, dans le tissu spongieux et la corticale supérieure, avec plaque sous corticale, éventuellement visée, tapissant l'os et à travers laquelle peuvent passer les implants.

Ces implants faisant partie de la première catégorie, s'ils sont généralement bien tolérés biologiquement par l'organisme, présentent toutefois divers inconvénients et notamment l'inconvénient majeur, d'une part, de provoquer pour la plupart un traumatisme important du périoste et de la fibromuqueuse lors de leur implantation du fait que la réalisation du lambeau interrompt la circulation sanguine et, d'autre part, d'être individuellement relativement peu stables, à cause de leurs dimensions relativement réduites et de leur bioformé simplifiée, lorsqu'ils sont soumis à des efforts mécaniques importants. Pour réduire le risque de mobilisation des implants de cette première catégorie, on a déjà pensé, au lieu de multiplier leur nombre au delà de quatre, à les stabiliser soit grâce à une rugosité de surface, soit en y associant des éléments qui s'appuient, d'une part, sur les implants et, d'autre part, sur au moins une des corticales vestibulaire ou linguale de l'os. Cette façon de faire, si elle procure déjà un progrès, présente l'inconvénient de ne pas exploiter les corticales inférieures de l'os, qui sont de loin les plus résistantes.

En outre, ces implants précités présentent encore l'inconvénient, d'une part, de nécessiter deux interventions distinctes et distantes d'environ trois à six mois, la première intervention laissant les implants inactifs enfouis (en nourrice) et, d'autre part, d'entraîner de nombreuses manipulations à l'aide d'un matériel complexe.

En ce qui concerne les implants connus de la seconde catégorie précitée, s'ils permettent d'améliorer notablement la stabilité mécanique en exploitant la corticale inférieure surtout grâce à la présence de la plaque sous corticale, présentent tout d'abord des inconvénients au niveau de l'intervention chirurgicale pour la pose des implants, de la plaque sous corticale et des nombreuses vis immobilisant cette dernière par rapport à l'os. En effet, cette intervention est relativement longue, elle présente des risques opératoires certains et peut laisser des traces opératoires visibles relativement importantes. De plus, les plaques et implants de ce type étant réalisés généralement en alliage d'or, leur coût élevé qui s'ajoute aux inconvénients de l'intervention chirurgicale susdite limitent considérablement leur grande diffusion; cette dernière étant en outre réduite du fait du nombre relativement restreint de praticiens capables de réaliser de telles interventions. En cas de problèmes postopératoires, cette seconde catégorie d'implants rend très délicate la dépose des implants et de la plaque sous corticale coopérant avec ceux-ci.

Enfin, les implants de chacune des deux catégories susdites font souvent appel, pour la fixation d'une prothèse, à l'utilisation d'un élément fixateur externe, tel que barre de Dolder, cadre ou bridge coulé, qui fait saillie par rapport à la gencive et qui relie entre eux les nombreux implants.

L'invention a pour but de remédier à ces inconvénients et de procurer un implant, en particulier pour la chirurgie du maxillaire inférieur (intramandibulaire), qui permet, d'une part, une perforation a retro et atraumatique du périoste et de la fibromuqueuse et, d'autre part, grâce à sa bioformé adaptée à l'os, un ancrage de l'implant au moins dans les corticales supérieure et inférieure de l'os, et de préférence dans l'étui cortical formé par les corticales inférieure, linguale et vestibulaire, qui assure l'immobilité primaire (au moment de la pose) et secondaire (après la mise en charge) de l'implant, sans nécessiter la pose d'éléments stabilisateurs s'appuyant sur les corticales, bien que cette pose d'éléments soit possible. L'implant suivant l'invention offre également l'avantage important de permettre, sans aucun traumatisme, le réattachement épithélial immédiat et l'affaissement normal de la muqueuse. Il permet en outre, même en nombre limité de deux à quatre et sans plaque sous corticale, de maintenir correctement une prothèse complète ou bridge équivalent et ce, en choisissant judicieusement les emplacements alors que les implants connus sont en général plus nombreux. De plus, l'implant suivant l'invention peut être utilisé avec succès dans des maxillaires à faible corticale supérieure ou dans des zones de maxillaires où la corticale supérieure est pratiquement inexistante, par exemple, suite à des extractions récentes.

Les implants suivant l'invention sont de plus de pose aisée avec intervention chirurgicale nettement moins importante que les interventions pour la pose des implants connus. Cette intervention peut être réalisée soit sans incision cutanée, soit avec de telles incisions qui ne laissent pratiquement pas de cicatrices visibles, tout en étant pratiquement sans risque opératoire ou postopératoire. Ce type d'intervention, qui s'effectue hors de la cavité buccale peut, grâce à un appareillage approprié, aisément être pratiqué par n'importe quel praticien capable de poser les implants simples du type cylindrique vissé ou non vissé susdit, sans obligation, comme c'est toujours pratiquement le cas pour la pose de ces derniers implants, de ruginer l'os en saillie étroite, au niveau de la corticale supérieure. En outre, l'implant suivant l'invention, vu sa facilité et sa sécurité de pose et le nombre extrêment réduit d'implants nécessaires au maintien d'une prothèse, pourra être diffusé bien plus largement que les implants connus compte tenu du coût réduit des implants suivant l'invention et de la pose de ceux-ci. De plus, leur pose ne nécessite qu'une seule intervention et leur mise en service peut être nettement plus rapide que celle des implants connus, ce qui réduit l'hypodynamie, notamment par l'usage d'une pièce simple, dont on parlera ci-après et qui permet de remplacer avantageusement le fixateur externe précité, destinée à assurer la fixation amovible ou fixe de la prothèse à l'implant, cette pièce étant elle-même fixée de manière amovible sur l'implant, ces fixations étant à emboîtement, l'emboîtement sur l'implant étant moins ou plus résistant que l'emboîtement sur la prothèse suivant que cette dernière est amovible ou est un bridge. La prothèse peut être rapidement assemblée aux implants grâce à ces pièces, qui sont facilement interchangeables et que l'on choisit de moins en moins élastiques au fur et à mesure que l'os supportant les implants se reconstitue en immobilisant fermement ces derniers. Ces pièces, de formes très simples et forcément en nombre limité à celui de l'implant, ne sont pas traumatisantes au niveau de la gencive et sont faciles à maintenir dans un état de propreté parfait. Les implants suivant l'invention permettent de passer d'un type de prothèse à l'autre, telle que prothèse amovible, bridge, etc.... Pour ce faire, il suffit de changer le type de pièce de liaison.

Il est également à noter que l'implant suivant l'invention peut, en cas de problème, être facilement déposé. Il a, en outre, dans sa zone intraosseuse, un diamètre tel que, dans cette zone, il peut, ce qui n'est pas le cas de la plupart des implants connus qui sont de trop faible section, être recouvert d'une couche d'épaisseur suffisante d'un biomatériau susceptible d'activer la régénérescence de la matière osseuse.

Lorsque l'implant suivant l'invention est utilisé conjointement à la pièce rapportée susdite, également suivant l'invention, qui sert de liaison entre l'implant et la prothèse, il réalise un système implantaire laissant l'implant immobile et permet à la prothèse certains mouvements et éventuellement une coopération maximale avec la muqueuse sur laquelle elle s'appuie tout en offrant l'avantage de remplacer, au moins partiellement, les quatre fonctions du ligament qui entoure les dents et de permettre une regénération parfaite de l'os. Ces pièces rapportées offrent encore l'avantage de transmettre les stimuli à l'os sous le seuil acceptable par lui.

A cet effet, suivant l'invention, la partie du fût destinée, d'une part, à être noyée dans la corticale supérieure de l'os et, d'autre part, à affleurer ou faire saillie dans la cavité buccale a une section, prise perpendiculairement à l'axe longitudinal du fût, qui est inférieure à la section correspondante de la partie de fût destinée à être noyée dans le tissu spongieux et dans la corticale inférieure.

Suivant une forme de réalisation de l'invention, la surface latérale du fût, à l'endroit où se raccordent la partie du fût de faible section destinée à être noyée dans la corticale supérieure et la partie de fût de section plus importante destinée à être noyée dans le tissu spongieux et dans la corticale inférieure, est profilée de manière soit à épouser sensiblement la face interne de la corticale supérieure de l'os, soit à s'insérer dans une cavité correspondante réalisée dans la corticale supérieure de l'os, à partir de sa face interne.

Suivant un mode de réalisation avantageux de l'invention, la surface latérale de la partie de fût de faible section destinée à être noyée dans la corticale supérieure et à effleurer ou à faire saillie dans la cavité buccale est lisse.

Suivant une forme de réalisation particulièrement avantageuse de l'invention, la zone de la partie de fût de forte section destinée à être noyée dans la corticale inférieure est en forme de cylindre de révolution coaxial au fût et sa surface latérale est filetée de manière à ce que le diamètre nominal du filet soit plus important que le diamètre de la zone susdite du fût destinée à être noyée dans le tissu spongieux, cette partie filetée de fût se prolongeant, à l'opposé de la partie de faible section, par une zone tronconique dont la section est décroissante à partir de la partie filetée susdite, cette zone présentant des moyens, tels que pans coupés, agencés pour servir d'appui à un instrument entraînant l'implant en rotation autour de son axe pour le visser dans la corticale inférieure, ou le dévisser.

La figure 1 est une vue schématique, en élévation et en coupe, montrant un implant suivant l'invention, disposé dans l'os d'un maxillaire inférieur, pourvu de sa pièce de liaison à une prothèse, cette pièce étant représentée à l'écart de l'implant.

Les figures 2 à 11 sont des vues analogues à la figure 1 et montrent des variantes de l'implant illustré à ladite figure 1.

Dans les différentes figures, les mêmes notations de référence désignent des éléments identiques ou analogues.

L'implant endo-osseux 1 suivant l'invention et illustré aux dessins est destiné à être utilisé en chirurgie maxillodentaire et en particulier en chirurgie du maxillaire inférieur. Il est constitué d'au moins une pièce qui comprend un fût 2, destiné à être noyé dans l'os 3 pour que son extrémité 4 affleure ou lasse saillie dans la cavité buccale. la dimension de ce fût, pris parallèlement à son axe longitudinal 5, est telle que ledit fût s'étend à travers la corticale supérieure 6, le tissu spongieux 7 et la corticale inférieure 8 de l'os, afin de s'appuyer sur ces deux corticales 6 et 8. la partie 2' du fût destinée, d'une part, à être noyée dans la corticale supérieure 6 de l'os et, d'autre part, à affleurer ou faire saillie dans la cavité buccale a une section, prise perpendiculairement à l'axe longitudinal 5 du fût, qui est inférieure à la section correspondante de la partie 2″ de fût destinée à être noyée dans le tissu spongieux 7 et dans la corticale inférieure 8. la section de la partie 2' peut être réduite au minimum autorisé par le matériau utilisé et par la résistance souhaitée sans compromettre pour autant la stabilité générale de l'implant.

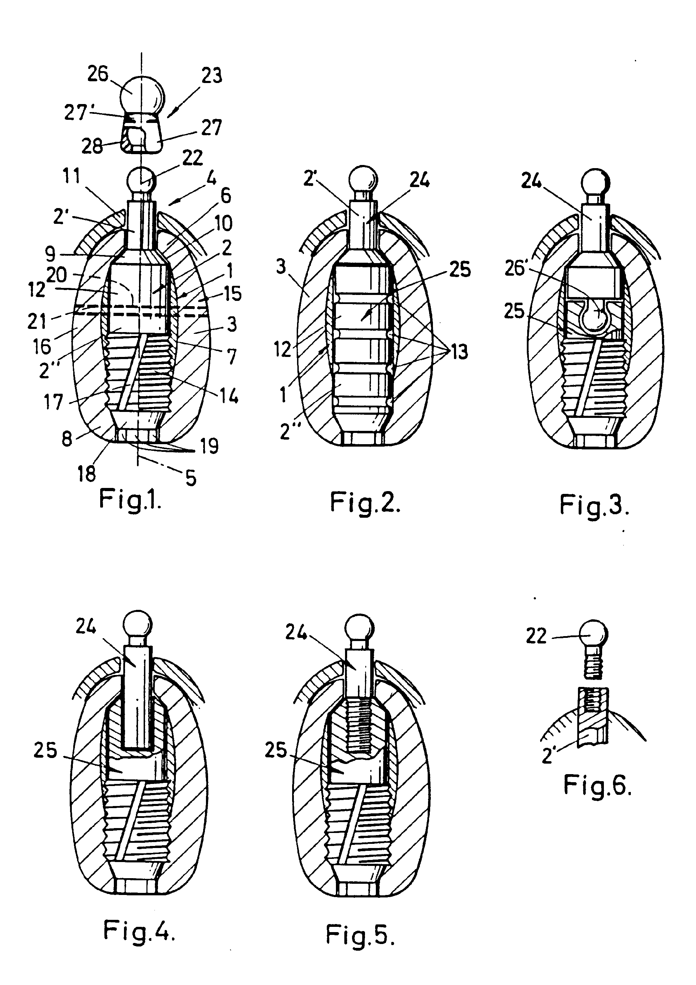

Pour renforcer la stabilité de l'implant, la surface latérale du fût, à l'endroit 9 où se raccordent la partie 2' du fût de faible section destinée à être noyée dans la corticale supérieure 6 et la partie 2″ de fût de section plus importante destinée à être noyée dans le tissu spongieux 7 et dans la corticale inférieure 8, est profilée, en forme de tronc de cône, de manière soit à épouser sensiblement la face interne de la corticale supérieure 6 de l'os, soit, comme montré à la figure 1, à s'insérer dans une cavité correspondante 10 réalisée dans la corticale supérieure de l'os, à partir de la face interne de cette dernière.

L'implant, qui est placé dans l'os à partir de la corticale inférieure 8 permet, grâce à ses caractéristiques, une perforation atraumatique du périoste et de la fibromuqueuse. Pour parfaire encore l'atraumatisme de la perforation et permettre par la suite le réattachement épithélial et l'affaissement normal de la muqueuse 11, sans irritation de cette dernière, la partie 2' de fût de faible section destinée à être noyée dans la corticale supérieure 6 et à affleurer ou à faire saillie dans la cavité buccale est avantageusement lisse. De plus, cette partie 2' de fût est en forme de cylindre de révolution ayant pour axe l'axe longitudinal 5 du fût.

La zone 12 de la partie 2″ de fût de forte section destinée à être noyée dans le tissus spongieux du maxillaire est également en forme de cylindre de révolution coaxial au fût et sa surface latérale est soit lisse ou rugueuse comme montré à la figure 1, soit présente des cativés, telles que rainures annulaires 13, de préférence régulièrement réparties (voir figure 2). la zone 14 de la partie 2″ de fût de forte section destinée à être noyée au moins partiellement dans la corticale inférieure 8 du maxillaire est en forme de cylindre de révolution coaxial au fût et sa surface latérale est filetée de manière à ce que le diamètre nominal du filet soit plus important que le diamètre de la zone 12 précitée qui est destinée à être noyée dans le tissu spongieux 7, le filet susdit étant avantageusement réalisé pour être autotaraudant.

La partie 2″ du fût de forte section et plus particulièrement la zone 14 de cette partie 2″ a un diamètre qui correspond au moins à la distance qui sépare les faces internes des corticales vestibulaire 16 et linguale 15 de l'os et qui de préférence est supérieur à cette distance. De sorte que, l'implant, au moins dans sa partie filetée, est totalement inclus et supporté dans l'étui cortical très résistant, qui est constitué par la corticale inférieure 8 et les corticales linguale 15 et vestibulaire 16.

Au moins une rainure 17 est ménagée, comme montré à la ligure 1, dans la surface latérale filetée de la zone 14 susdite. Cette rainure est agencée de manière à permettre l'évacuation des débris d'os résultant du vissage de l'implant à travers la corticale inférieure 8 de l'os.

Toujours pour renforcer la stabilité de l'implant, la partie filetée du fût se prolonge, pour épouser la forme de l'étui cortical et à l'opposé de la partie 2' de faible section, par une zone tronconique 18 dont la section est décroissante à partir de la partie filetée susdite, cette zone 18 présentant avantageusement des moyens, tels que pans coupés 19, agencés pour servir d'appui à un instrument entraînant l'implant en rotation autour de son axe 5 pour le visser dans la corticale intérieure 8 ou le dévisser.

Si l'on souhaite encore bloquer l'implant plus fermement dans l'os, la partie 2″ de fût de forte section peut être pourvue d'au moins un trou 20 (voir figure 1) percé de part en part dans le fût, suivant une direction transversale à l'axe 5 de ce dernier, et destiné à recevoir une tige 21 permanente ou non, de section correspondante, qui est prévue pour être noyée dans l'os et qui est soutenue à au moins une de ses extrémités dans la corticale vestibulaire 16 ou la corticale linguale 15 de l'os, comme un verrouillage dans un clou centromédullaire en chirurgie orthopédique.

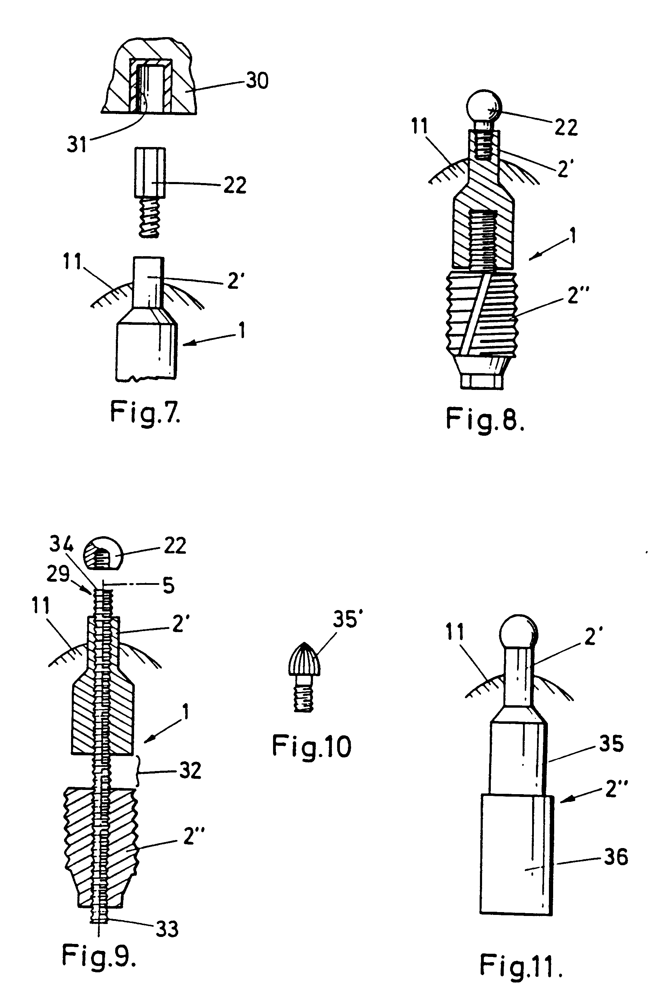

L'implant suivant l'invention peut être réalisé en une seule pièce, comme montré à la figure 1, ou en deux pièces, comme montré notamment à la figure 6, où la partie 22 de l'implant assurant le maintien de la pièce de liaison 23 de la prothèse est amovible, par exemple par dévissage.

Toutefois, suivant l'invention, le fût de l'implant pourrait aussi, pour certaines applications et comme montré notamment aux figures 8 et 9, être réalisé en au moins deux parties.

C'est ainsi que, commune montré à la figure 2, le fût 2 susdit peut être constitué de deux éléments distincts 24 et 25 alignés bout à bout et s'appuyant librement l'un sur l'autre, les longueurs de ces éléments étant telles que leur jonction s'effectue dans le tissu spongieux 7 de l'os.

Comme montré à la figure 3, le fût pourrait être constitué de deux éléments distincts 24 et 25 disposés bout à bout et réunis entre eux par une articulation 26', du type genouillère, les longueurs des deux éléments étant telles que l'articulation 26' est située dans le tissu spongieux 7 de l'os.

Comme illustré aux figures 4 et 5, le fût 2 pourrait encore être constitué de deux éléments 24 et 25 distincts qui sont coaxiaux, l'élément 24 de faible section s'emboîtant ou se vissant dans l'élément 25 de forte section.

Les implants qui ne sont pas réalisés en une seule pièce ont leurs éléments qui sont fabriqués soit en un même matériau, tel que titane, céramique, carbone-carbone alliage d'or soit en matériaux différents. On pourrait notamment prévoir de réaliser la partie 22 de l'implant, montré à la figure 6, en un matériau présentant une certaine élasticité, tel que du caoutchouc dur. Cette partie 22 pourrait également être constituée par n'importe quel insert vissé ou cimenté.

L'insert 22 de l'implant illustré à la figure 7 est particulièrement destiné à maintenir une couronne ou bridge 30 sur l'implant 1. Cette couronne ou bridge 10 présente un élément viscoélastique 31 qui est serti et à l'intérieur duquel se loge l'insert 22. Comme montré à la figure 8, l'implant suivant l'invention pourrait également être constitué en trois parties s'assemblant par vissage, une partie 2' qui constitue l'implant dentaire semi-inclus, la partie 2" qui constitue l'implant chirurgical totalement inclus et l'insert 22, ce dernier se vissant sur la partie 2', tandis que celle-ci se visse sur la partie 2". Cet implant permet de régler sa longueur en fonction des dimensions de l'os. Ce réglage en longueur peut également être obtenu, de façon plus souple en utilisant un implant tel que représenté à la figure 9. Ce dernier implant est constitué de deux parties 2' et 2" telles que définies ci-dessus. Celles-ci sont taraudées de part en part, suivant l'axe 5, et sont asemblées par une vis commune 29, tout en permettant le réglage de l'écartement 32 séparant les pièces 2' et 2" en fonction de la dimension correspondante de l'os. lorsque les parties 2' et 2" sont en place, la portion 33 de la vis 29 qui dépasse de la partie 2" est sectionnée, tandis que la portion 34 de vis 29 qui fait saillie par rapport à la partie 2' sert de fixation à un insert 22 qui se visse sur cette portion 34.

On peut utiliser, pour la pose d'implants à insert détachable, un implant pourvu, comme montré à la figure 10, d'un outil de fraisage 35' qui est fixé à l'implant à la place de l'insert et qui perce la corticale supérieure lors de la pose de l'implant, cet outil 35' étant ensuite dévissé et remplacé par l'insert.

Dans la forme de réalisation de l'implant illustrée à la figure 11, la partie 2" du fût de forte section est réalisée en une seule pièce et est formée de deux cylindres de révolution 35 et 36 qui sont coaxiaux et superposés et dont les surfaces latérales sont lisses ou rugueuses. le diamètre du cylindre 36, qui est destiné être noyé à la partie inférieure de l'étui cortical susdit, a un diamètre supérieur à celui du cylindre 35 qui est destiné à être noyé dans le tissu spongieux de l'os.

Vu sa section, au moins la partie 2" de l'implant peut être recouverte d'une couche de biomatériau capable d'activer la régénérescence de la matière osseuse.

Comme montré aux dessins, la partie 2' du fût 2 destinée à être noyée dans la corticale supérieure 6 a une longueur telle que l'implant fait saillie par rapport à la gencive. Cette partie 22 de l'implant, en saillie par rapport à la gencive, est agencée pour permettre d'immobiliser, au moins temporairement, une pièce 23 qui fait partie de l'implant et qui assure la liaison entre ce dernier et une prothèse amovible.

Cette pièce 23 est réalisée en un matériau viscoélastique, et l'implant 1 et la pièce 23 sont agencés pour que la prothèse repose librement sur la gencive.

Ladite pièce 23 a avantageusement une forme tronconique, qui est sensiblement coaxiale au fût 2, et présente, raccordé à sa petite base, pour former un col 27' de longueur variable suivant la viscoélasticité souhaitée et le degré d'enfoncement de la prothèse, un élément 26 d'allure sphérique. La partie 27 de la pièce 23, qui est tronconique, comporte un évidement intérieur 28 dans lequel se loge l'extrémité libre 22 de l'implant faisant saillie dans la cavité buccale de manière à ce que la pièce 23 soit retenue sur cette extrémité, tandis que l'élément sphérique 26 est destiné à être logé dans une cavité correspondante prévue sur la prothèse afin de maintenir cette dernière par rapport à l'implant.

Les liaisons implant 1 - pièce 23 et pièce 23 - prothèse sont réalisées de manière à ce que, lorsqu'une traction est exercée sur la prothèse amovible, les pièces 23 se séparent des implants et restent en place sur la prothèse. Cette façon de faire permet de procéder facilement aux vérifications de l'état de la partie de l'implant et de la gencive au voisinage de celle-ci, ainsi qu'au maintien dans un état de propreté suffisant de cette partie d'implant.

Afin de solliciter le moins possible les implants, on choisit la viscoélasticité des pièces de liaison 23 pour qu'elle soit plus importante que la viscoélasticité de la gencive.

Il doit être entendu que l'invention n'est nullement limitée aux formes de réalisation décrites et que bien des modifications peuvent être apportées à ces dernières sans sortir du cadre du présent brevet.

## Revendications

1. Implant endo-osseux (1), utilisé en chirurgie maxillodentaire, en particulier chirurgie du maxillaire inférieur, et constitué d'au moins une pièce qui comprend un fût (2), destiné à être noyé dans l'os (3), dont une des extrémités (4) est destinée à affleurer ou à faire saillie dans la cavité buccale et dont la dimension, prise parallèlement à son axe longitudinal (5), est telle que ledit fût (2) s'étend à travers la corticale supérieure (6), le tissu spongieux (7) et la corticale inférieure (8) de l'os, afin de s'appuyer sur ces deux corticales (6 et 8), ledit implant étant caractérisé en ce que la partie supérieure (2') du fût destinée, d'une part, à être noyée dans la corticale supérieure (6) de l'os et, d'autre part, à affleurer ou faire saillie dans le cavité buccale a une section, prise perpendiculairement à l'axe longitudinal (5) du fût, qui est inférieure à la section correspondante de la partie inférieure (2") de fût destinée à être noyée dans le tissu spongieux (7) et dans la corticale inférieure (8).

2. Implant suivant la revendication 1, caractérisé en ce que la surface latérale du fût, à l'endroit (9) où se raccordent la partie (2') du fût de faible section destinée à être noyée dans la corticale supérieure (6) et la partie (2") de fût de section plus importante destinée à être noyée dans le tissu spongieux (7) et dans la corticale inférieure (8), est profilée de manière soit à épouser sensiblement la face interne de la corticale supérieure (6) de l'os, soit à s'insérer dans une cavité correspondante (10) réalisée dans la corticale supérieure (6) de l'os, à partir de sa face interne.

3. Implant suivant l'une ou l'autre des revendications 1 et 2, caractérisé en ce que la surface latérale de la partie (2') de fût de faible section destinée à être noyée dans la corticale supérieure (6) et à affleurer ou à faire saillie dans la cavité buccale est lisse, cette partie (2') étant en forme de cylindre de révolution ayant pour axe l'axe longitudinal (5) du fût.

4. Implant suivant l'une quelconque des revendications 1 à 3, caractérisé en ce que la zone (12) de la partie (2") de fût de forte section destinée à être noyée dans le tissu spongieux du maxillaire est en forme de cylindre de révolution coaxial au fût et sa surface latérale est soit lisse ou rugueuse, soit présente des cavités, telles que rainures annulaires (13), de préférence régulièrement réparties.

5. Implant suivant la revendication 4, caractérisé en ce que la zone (14) de la partie (2") de fût de forte section destinée à être noyée dans la corticale inférieure (8) est en forme de cylindre de révolution coaxial au fût et sa surface latérale est filetée de manière à ce que le diamètre nominal du filet soit plus important que le diamètre de la zone (12) susdite du fût destinée à être noyée dans le tissu spongieux (7).

6. Implant suivant le revendication 5, caractérisé en ce qu'au moins une rainure (17) est ménagée dans la surface latérale filetée susdite et agencée de manière à permettre l'évacuation des débris d'os résultant du vissage de l'implant à travers la corticale inférieure (8).

7. Implant suivant l'une ou l'autre des revendications 5 et 6, caractérisé en ce que la partie filetée du fût se prolonge, à l'opposé de la partie (2') de faible section, par une zone tronconique (18) dont la section est décroissante à partir de la partie filetée susdite, cette zone (18) présentant des moyens (19), tels que pans coupés, agencés pour servir d'appui à un instrument entraînant l'implant en rotation autour de son axe (5) pour le visser dans la corticale inférieure (8) ou le dévisser.

8. Implant suivant l'une quelconque des revendications 1 à 4, caractérisé en ce que la partie (2") de fût de forte section est formée d'au moins deux cylindres de révolution (35 et 36) coaxiaux et superposés, le cylindre (36) le plus proche de la corticale inférieure étant de diamètre supérieur à celui de l'autre cylindre (35).

9. Implant suivant l'une quelconque des revendications 1 à 8, caractérisé en ce que la partie (2") de fût de plus forte section a un diamètre qui correspond au moins à la distance qui sépare les faces internes des corticales vestibulaire (16) et linguale (15) de l'os.

10. Implant suivant l'une quelconque des revendications 1 à 9, caractérisé en ce que la partie (2") de fût de forte section présente au moins un trou (20) percé de part en part dans le fût, suivant une direction transversale à l'axe de ce dernier, et destiné à recevoir une tige (21), de section correspondante, qui est prévue pour être noyée dans l'os et qui est soutenue à au moins une de ses extrémités dans la corticale vestibulaire (16) ou la corticale linguale (15) de l'os.

11. Implant suivant l'une quelconque des revendications 1 à 10, caractérisé en ce que le fût (2) susdit est constitué d'au moins deux éléments distincts (24 et 25).

12. Implant suivant la revendication 11, caractérisé en ce que les deux éléments (24 et 25) susdits sont alignés bout à bout et s'appuyent librement l'un sur l'autre, les longueurs de ces éléments étant telles que leur jonction s'effectue dans le tissu spongieux (7) de l'os.

**13.** Implant suivant la revendication 11, caractérisé en ce que les deux éléments (24 et 25) sont disposés bout à bout et réunis entre eux par une articulation (26'), du type genouillère, les longueurs des deux éléments étant telles que l'articulation est située dans le tissu spongieux de l'os.

**14.** Implant suivant la revendication 11, caractérisé en ce que les deux éléments (24 et 25) sont coaxiaux, l'un des éléments s'emboîtant ou se vissant dans l'autre, suivant l'axe (5) susdit.

**15.** Implant suivant la revendication 11, caractérisé en ce que les deux éléments (24 et 25) sont taraudés de part en part suivant l'axe (5) susdit, une vis (29) étant prévue pour coopérer avec les taraudages desdits éléments pour immobiliser ces derniers l'un par rapport à l'autre.

**16.** Implant suivant l'une quelconque des revendications 11 à 15, caractérisé en que que les deux éléments (24 et 25) sont réalisés en un même matériau, tel que titane, céramique, carbone carbonne, alliage d'or.

**17.** Implant suivant l'une quelconque des revendications 11 à 15, caractérisé en ce que les deux éléments (24 et 25) sont réalisés en matériaux différents.

**18.** Implant suivant l'une quelconque des revendications 1 à 17, caractérisé en ce que la surface latérale d'au moins la partie (2″) de l'implant de forte section est recouverte d'une couche de biomatériau capable d'activer la régénérescence de la matière osseuse.

**19.** Implant suivant l'une quelconque des revendications 1 à 18, caractérisé en ce que la partie (2') susdite du fût (2) destinée à être noyée dans la corticale supérieure (6) a une longueur telle que l'implant fait saillie par rapport à la gencive, cette partie (22) de l'implant, en saillie par rapport à la gencive, étant agencée pour permettre d'immobiliser, au moins temporairement, une pièce (23) faisant partie de l'implant et assurant la liaison entre ce dernier et une prothèse.

**20.** Implant suivant la revendication 19, caractérisé en ce que ladite pièce (23) est réalisée en un matériau viscoélastique, l'implant (1) et la pièce (23) étant agencés pour que la prothèse repose librement sur la gencive.

**21.** Implant suivant la revendication 20, caractérisé en ce que la pièce (23) susdite a une forme tronconique sensiblement coaxiale à l'implant, et présente, raccordé à sa petite base un élément (26) d'allure sphérique, la partie (27) de la pièce (23) qui est tronconique comportant un évidemment intérieur (28) dans lequel se loge l'extrémité libre (22) de l'implant faisant saillie dans la cavité buccale de manière à ce que la pièce (23) soit retenue sur cette extrémité, tandis que l'élément sphérique (26) est destiné à être logé dans une cavité correspondante prévue sur la prothèse afin de maintenir cette dernière par rapport à l'implant (1).

**22.** Implant suivant l'une ou l'autre des revendications 20 et 21, caractérisé en ce que la viscoélasticité de la pièce de liaison (23) susdite est plus importante que la viscoélasticité de la gencive.

**Claims**

**1.** Endosteal implant (1), used in maxillo-dental surgery, in particular surgery of the lower maxillary bone, and consisting of at least one piece comprising a body (2), intended to be embedded in the bone (3), one (4) of the ends of which is intended to be flush with the cavity of the mouth or to be in projection in this cavity and the dimension of which, when considered in a parallel direction to its longitudinal axis (5), is such that said body (2) extends through the upper cortical area (6), the bluberry tissue (7) and the lower cortical area (8) of the bone, in order to bear on both said cortical areas (6) and (8), this implant being characterized in that the upper part (2') of the body intended, on the one hand, to be embedded in the upper cortical area (6) of the bone and, on the other hand, to be flush with the cavity of the mouth or to be in projection in this cavity, has a cross-section, when considered perpendicularly to the longitudinal axis (5) of the body, which is lower than the corresponding cross-section of the lower part (2″) of the body, intended to be embedded in the bluberry tissue (7) and in the lower cortical area (8).

**2.** Implant according to claim 1, characterized in that the side suface of the body, at the location (9) where the body part (2') of low cross-section, intended to be embedded in the upper cortical area (6) and the body part (2″) of larger cross-section intended to be embedded in the bluberry tissue (7) and in the lower cortical area (8) fit together, is shaped so as either to substantially take the shape of the internal face of the upper cortical area (6) of the bone, or to be inserted into a corresponding cavity (10) provided in the upper cortical area (6) of the bone, from its internal face.

**3.** Implant according to either of claims 1 and 2, characterized in that the side surface of the body part (2′) of low cross-section, intended to be embedded in the upper cortical area (6) and to be flush with the cavity of the mouth or to be in projection in this cavity is smooth, this part (2′) being as a cylinder of revolution having as its axis, the longitudinal axis (5) of the body.

4. Implant according to any of claims 1 to 3, characterized in that the area (12) of the body part (2″) of large cross-section, intended to be embedded in the bluberry tissue of the maxillary bone is as a cylinder of revolution which is coaxial to the body, and its side surface either is smooth or rough, or presents cavities, such as annular grooves (13), which are preferably distributed in a regular manner.

5. Implant according to claim 4, characterized in that the area (14) of the body part (2″) of large cross-section, intended to be embedded in the lower cortical area (8) is as a cylinder of revolution, which is coaxial to the body, and its side surface is threaded so that the nominal diameter of the thread is larger than the diameter of the body area (12) intended to be embedded in the bluberry tissue (7).

6. Implant according to claim 5, characterized in that at least a groove (17) is provided in said threaded side surface and arranged so as to allow the bone wastes resulting from the screwing of the implant through the lower cortical area (8) to be discharged.

7. Implant according to either of claims 5 and 6, characterized in that the threaded portion of the body extends, opposite the part (2′) of low cross-section, as a truncated area (18) the cross-section of which decreases from said threaded portion, this area (18) presenting means (19), such as cut-off flaps, arranged to be used as a support for an instrument rotating the implant around its axis (5) in order to screw this implant into the lower cortical area (8) or to unscrew it therefrom.

8. Implant according to any of claims 1 to 4, characterized in that the body part (2″) of large cross-section consists of at least two cylinders of revolution (35 and 36) which are coaxial and superimposed, the cylinder (36) which is the nearest to the lower cortical area being of a diameter larger than the diameter of the other cylinder (35).

9. Implant according to any of claims 1 to 8, characterized in that the part (2″) of the body of larger cross-section has a diameter corresponding at least to the distance separating the internal faces of the vestibular cortical area (16) and of the lingual cortical area (15) of the bone.

10. Implant according to any of claims 1 to 9, characterized in that the body part (2″) of large cross-section comprises at least one hole (20) passing right through the body, along a direction which is perpendicular to the axis of the latter, and intended to receive a rod (21), of corresponding cross-section, which is provided to be embedded in the bone and is supported at least at one of its ends in the vestibular cortical area (16) or the lingual cortical area (15) of the bone.

11. Implant according to any of claims 1 to 10, characterized in that said body (2) consists of at least two distinct elements (24 and 25).

12. Implant according to claim 11, characterized in that both said elements (24 and 25) are aligned end to end and freely bear on each other, the lengths of these elements being such as their junction occurs in the bluberry tissue (7) of the bone.

13. Implant according to claim 11, characterized in that both elements (24 and 25) are arranged end to end and are reunited together through a connection (26′) of the knuckle type, the lengths of both elements being such that the connection is located in the bluberry tissue of the bone.

14. Implant according to claim 11, characterized in that both elements (24 and 25) are coaxial, one of these elements fitting or screwing into the other, along said axis (5).

15. Implant according to claim 11, characterized in that both elements (24 and 25) are tapped right through along said axis (5), a screw (29) being provided to cooperate with the tappings of said elements in order to immobilize the latter with respect to each other.

16. Implant according to any of claims 11 to 15, characterized in that both elements (24 and 25) are made of a same material, such as titanium, ceramic, carbon , carbonne, gold alloy.

17. Implant according to any of claims 11 to 15, characterized in that both elements (24 and 25) are made of different materials.

18. Implant according to any of claims 1 to 17, characterized in that the side surface of at least the part (2″) of the implant of large cross-section is covered with a layer of a biomaterial able to activate the rejuvenation of the osseous material.

19. Implant according to any of claims 1 to 18, characterized in that said part (2') of the body (2) intended to be embedded in the upper cortical area (6) has such a length that the implant projects with respect to the gum, this portion (22) of the implant which is in projection with respect to the gum, being arranged in order to immobilize, at least temporarily, a piece (23) forming part of the implant and ensuring the binding between the latter and a prosthesis.

20. Implant according to claim 19, characterized in that said piece (23) is made of a visco-elastic material, the implant (1) and the piece (23) being arranged so that the prosthesis freely bears on the gum.

21. Implant according to claim 20, characterized in that said piece (23) has a truncated shape which is substantially coaxial to the implant and presents an element (26) of spherical shape connected to its small base, the portion (27) of the piece (23) which is truncated comprising an internal recess (28) in which the free end (22) of the implant projecting in the cavity of the mouth is lodged, so that the piece (23) is retained on this end, while the spherical element (26) is intended to be lodged in a corresponding cavity provided in the prosthesis so as to maintain the latter with respect to the implant (1).

22. Implant according to either of claims 20 and 21, characterized in that the visco-elasticity of the binding piece (23) is higher than the visco-elasticity of the gum.

**Patentansprüche**

1. Endosteales Implantat (1) zur Verwendung in der Kiefer- und Zahnchirurgie, insbesondere in der Unterkieferchirurgie, bestehend aus mindestens einem Stück, das einen in den Knochen (3) einzulassenden Schaft (2) besitzt, dessen eines Ende (4) bündig an die Mundhöle anschließt oder in sie hineinragt und dessen Abmessung parallel zu seiner Längsachse (5) so groß ist, daß sich der gennante Schaft (2) über die obere Rinde (6), das schwammige Gewebe (7) und die untere Rinde (8) des Knochens erstreckt, so daß er sich gegen diese beiden Rinden (6 und 8) abstütz; **dadurch gekennzeichnet,** daß der obere Teil (2') des Schafts, der einerseits in die obere Rinde (6) des Knochens einzulassen ist und andererseits bündig an die Mundhöhle anschließen oder in sie hineinragen soll, senkrecht zur Längsachse (5) des Schafts einen Querschnitt hat, der kleiner ist als der entsprechende Querschnitt des unteren Schaftteils (2''), der in das schwammige Gewebe (7) und die untere Rinde (8) einzulassen ist.

2. Implantat gemäß Anspruch 1, **dadurch gekennzeichnet,** daß die Seitenfläche des Schafts an der Stelle (9), an der der in die obere Rinde (6) einzulassende Schaftteil (2') mit kleinem Querschnitt und der in das schwammige Gewebe (7) und die untere Rinde (8) einzulassende Schaftteil (2'') mit dem größeren Querschnitt aneinanderstoßen, ein solches Profil hat, daß sie sich entweder in wesentlichen an die Innenfläche der oberen Rinde (6) des Knochens anschmiegt oder in eine entsprechende, in die Innenfläche der oberen Rinde (6) des Knochens eingearbeitete Aushöhlung (10) eingesetzt wird.

3. Implantat gemäß Anspruch 1 oder 2, **dadurch gekennzeichnet,** daß die Seitenfläche des in die obere Rinde (6) einzulassenden Schaftteils (2') mit kleinem Querschnitt, der bündig an die Mundhöhle anschließen oder in die hineinragen soll, glatt ist, und daß dieser Teil (2') die Form eines Rotationszylinder hat, dessen Drehachse die Längsachse (5) des Schafts ist.

4. Implantat gemäß einem der Ansprüche 1 bis 3, **dadurch gekennzeichnet,** daß der Bereich (12) des in das schwammige Gewebe des Kiefers einzulassenden Schaftteils (2'') mit großen Querschnitt die Form eines mit dem Schaft koaxialen Rotationszylinders hat, und daß seine Seitenfläche entweder glatt oder rauh ist oder Aushöhlungen, wie zum Beispiel ringförmige Nuten (13) aufweist, die vorzugsweise gleichmäßig verteilt sind.

5. Implantat gemäß Anspruch 4, **dadurch gekennzeichnet,** daß der Bereich (14) des in die untere Rinde (8) einzulassenden Schaftteils (2'') mit großem Querschnitt die Form eines mit dem Schaft koaxialen Rotationszylinders hat, und daß seine Seitenfläche mit einem solchen Gewinde versehen ist, daß der Nenndurchmesser des Gewindes größer ist als der Durchmesser des vorgennanten Bereichs (12) des in das schwammige Gewebe (7) einzulassenden Schafts.

6. Implantat gemäß Anspruch 5, **dadurch gekennzeichnet,** daß mindestens eine Nut (17) in die vorgennante gewindete Seintenfläche eingeformt und so ge-

9

staltet ist, daß die beim Einschrauben des Implantats in die untere Rinde (8) entstehenden Knochenspäne abgeführt werden können.

7. Implantat gemäß Anspruch 5 oder 6,
**dadurch gekennzeichnet,**
daß der gewindete Schaftteil sich gegenüber dem Teil (2') mit kleinem Querschnitt in einem kegelstumpfförmigen Bereich (18) mit einem ab dem gennanten gewindeten Teil abnehmenden Querschnitt fortsetzt, wobei dieser Bereich (18) mit Mitteln (19), wie zum Beispiel Abschrägungen, versehen ist, die als Auflage für ein Instrument dienen können, welches das Implantat in Drehung um seine eigene Achse (5) versetzt, um es in die untere Rinde (8) ein- oder auszuschrauben.

8. Implantat gemäß einem der Ansprüche 1 bis 4,
**dadurch gekennzeichnet,**
daß der Schaftteil (2") mit großem Querschnitt aus mindestens zwei koaxialen, übereinanderstehenden Rotationszylindern (35 und 36) aufgebaut ist, wobei der der unteren Rinde näher liegende Zylinder (36) einen größeren Durchmesser hat als der andere Zylinder (35).

9. Implantat gemäß einem der Ansprüche 1 bis 8,
**dadurch gekennzeichnet,**
daß der Durchmesser des Schaftteils (2") mit dem größeren Querschnitt mindestens dem Abstand zwischen den Innenflächen der Vorhofrinde (16) und der Zungenrinde (15) des Knochens enstpricht.

10. Implantat gemäß einem der Ansprüche 1 bis 9,
**dadurch gekennzeichnet,**
daß der Schaftteil (2") mit großem Querschnitt mindestens ein durch den Schaft hindurchgehendes Loch (20) aufweist, das quer zur Schaftachse verläuft und dazu bestimmt ist, eine Stange (21) mit entsprechendem Querschnitt aufzunehmen, die in den Knochen einzulassen ist und die an mindestens einem ihrer Enden in der Vorhofrinde (16) oder in der Zungenrinde (15) des Knochens gehalten wird.

11. Implantat gemäß einem der Ansprüche 1 bis 10,
**dadurch gekennzeichnet,**
daß der vorgennante Schaft (2) aus mindestens zwei unterschiedlichen Elementen (24 und 25) besteht.

12. Implantat gemäß Anspruch 11,
**dadurch gekennzeichnet,**
daß die vorgennanten zwei Elemente (24 und 25) mit den Enden aneinander in einer Fluchtlinie ausgerichtet sind und sich frei aufeinander abstützen, wobei die Längen dieser Elemente so bemessen sind, daß ihre Verbindungsstelle im schwammigen Gewebe (7) des Knochens liegt.

13. Implantat gemäß Anspruch 11,
**dadurch gekennzeichnet,**
daß die zwei Elemente (24 und 25) mit den Enden aneinanderliegen und durch ein Kniehebelgelenk (26') miteinander verbunden sind, wobei die Längen der beiden Elemente so bemessen sind, daß das Gelenk im schwammigen Gewebe des Knochens liegt.

14. Implantat gemäß Anspruch 11,
**dadurch gekennzeichnet,**
daß die zwei Elemente (24 und 25) koaxial sind und eines der Elemente entlang der vorgennanten Achse (5) in das andere eingesetzt oder eingeschraubt wird.

15. Implantat gemäß Anspruch 11,
**dadurch gekennzeichnet,**
daß die zwei Elemente (24 und 25) entlang der vorgennanten Achse (5) durchgehend mit einem Innengewinde versehen sind, und eine mit den Innengewinden zusammenwirkende Schraube (29) vorgesehen ist, um die gennanten Elemente gegeneinander zu verriegeln.

16. Implantat gemäß einem der Ansprüche 11 bis 15,
**dadurch gekennzeichnet,**
daß die zwei Elemente (24 und 25) aus demselben Werkstoff, zum Beispiel Titan, Keramik, Kohlenstoff, Goldlegierung, gefertig sind.

17. Implantat gemäß einem der Ansprüche 11 bis 15,
**dadurch gekennzeichnet,**
daß die zwei Elemente (24 und 25) aus verschiedenen Werkstoffen gefertigt sind.

18. Implantat gemäß einem der Ansprüche 1 bis 17,
**dadurch gekennzeichnet,**
daß die Seitenfläche mindestens des Implantatteils (2") mit großem Querschnitt mit einer Lage Biomaterial beschichtet ist, das in der Lage ist, die Knochenneubildung anzuregen.

19. Implantat gemäß einem der Ansprüche 1 bis 18,
**dadurch gekennzeichnet,**
daß die Länge des vorgennanten Teils (2') des in die obere Rinde (6) einzulassenden Schafts (2) so bemessen ist, daß das Implantat über das Zahnfleisch hinausragt, und dieser Teil (22) des Implantats, der über das Zahnfleisch hinausragt, so gestaltet ist, daß ein zum Implantat gehörendes Stück (23) zumindest vorübergehend festgesetzt werden und die Verbindung zwischen diesem Stück und einer Prothese gewährleisten kann.

20. Implantat gemäß Anspruch 19,
**dadurch gekennzeichnet,**
daß das gennante Stück (23) aus einem viskoelastischen Material besteht und das Implantat (1) und das Stück (23) so gestaltet sind, daß die Prothese frei auf dem Zahnfleisch ruht.

21. Implantat gemäß Anspruch 20,
**dadurch gekennzeichnet,**
daß das vorgennante Stück (23) die Form eines im wesentlichen zum Implantat koaxialen Kegelstumpfes hat, an dessen kleine Basis sich ein kugelförmiges Element (26) anschließt, wobei derjenige Teil (27) des Stücks (23), der kegelstumpfförmig ist, eine innere Aussparung (28) hat, die das in die Mundhöhle ragende freie Ende (22) des Implantats aufnimmt, so daß das Stück (23) auf diesem Ende festgehalten wird, während das kugelförmige Element (26) von einer entsprechenden, in der Prothese vorgesehenen Aushöhlung aufgenommen wird, um diese gegenüber dem Implantat (1) festzuhalten.

22. Implantat gemäß Anspruch 20 oder 21,
**dadurch gekennzeichnet,**
daß die Viskoelastizität des vorgennanten Verbindungsstücks (23) größer ist als die Viskoelastizität des Zahnfleischs.

Fig.1.

Fig.2.

Fig.3.

Fig.4.

Fig.5.

Fig.6.

Fig.7.

Fig.8.

Fig.9.

Fig.10

Fig.11.